(19)

Europäisches
Patentamt
European
Patent Office
Office européen
des brevets

(11) **EP 4 589 943 A1**

(12) **EUROPEAN PATENT APPLICATION**
published in accordance with Art. 153(4) EPC

(43) Date of publication:
**23.07.2025 Bulletin 2025/30**

(21) Application number: 23865286.1

(22) Date of filing: **30.08.2023**

(51) International Patent Classification (IPC):
*H04N 13/327* (2018.01)  *H04N 13/122* (2018.01)
*H04N 13/133* (2018.01)  *H04N 13/344* (2018.01)
*H04N 17/00* (2006.01)

(52) Cooperative Patent Classification (CPC):
**G02B 27/0101; G02B 27/0172; H04N 13/122;
H04N 13/133; H04N 17/00;** G02B 2027/011;
G02B 2027/0138; G02B 2027/014; H04N 13/327;
H04N 13/344

(86) International application number:
**PCT/JP2023/031452**

(87) International publication number:
**WO 2024/057930 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022  US 202263407302 P**

(71) Applicant: **Panasonic Intellectual Property
Management Co., Ltd.
Kadoma-shi, Osaka 571-0057 (JP)**

(72) Inventors:
• **NAKANISHI, Hirokazu**
  **Osaka 571-0057 (JP)**
• **KASHIWAGI, Yoshiichiro**
  **Osaka 571-0057 (JP)**
• **MORI, Yoshihiro**
  **Osaka 571-0057 (JP)**
• **KOZUKA, Masayuki**
  **Osaka 571-0057 (JP)**

(74) Representative: **Eisenführ Speiser
Patentanwälte Rechtsanwälte PartGmbB
Gollierstraße 4
80339 München (DE)**

(54) **CORRECTION METHOD, MEASUREMENT METHOD, AND HEAD-MOUNTED DISPLAY
SYSTEM**

(57)  This correction method comprises: acquiring, by means of a processing circuit of a head-mounted display, projection angles via a photographic lens of dots of a correction test pattern corresponding to dots of a reference test pattern, the angle being calculated on the basis of the correction test pattern obtained by photographing the reference test pattern with the photographic lens through a correction lens that corrects the user's visual characteristics, the reference test pattern including one dot placed at a reference point and at least one dot placed on each of a plurality of straight lines extending in different directions from the reference point; and correcting, by means of the processing circuit, distortion in a virtual space image caused by the adjustment lens on the basis of projection angles corresponding to the dots of the reference test pattern.

FIG. 10A          FIG. 10B

EP 4 589 943 A1

**Description**

Technical Field

The present disclosure relates to a correction method, a measurement method, and a head-mounted display system.

Background Art

Conventionally, an image display system capable of viewing a target space from a free viewpoint has been widely used. For example, there is known an image display system in which a user wears a head-mounted display (HMD) and which displays an image corresponding to a line-of-sight of the user on the HMD to allow the user to experience Virtual Reality (VR). Generally, in HMDs, a display section is located at a close distance to the user's eyes, and the HDMs are provided with an adjustment lens for adjusting the focal point of the eyes with respect to the display section. Here, the adjustment lens may cause a lens distortion called a pincushion lens distortion depending on the focal length. It has been proposed that when this pincushion lens distortion occurs, the lens distortion is corrected by generating a barrel distortion image in which a change opposite to the change caused due to the aberration of the adjustment lens is applied to the image displayed on the display section.

For example, Patent Literature (hereinafter, referred to as "PTL") 1 discloses a calibration apparatus that captures an image of a chart for calibration by an imaging apparatus having a fisheye lens, and corrects lens distortion using the captured image.

Citation List

Patent Literature

PTL 1
WO2019/049421

Summary of Invention

Technical Problem

However, in the calibration apparatus of PTL 1, the correction data is generated using the chart pattern in which the horizontal line and the vertical line are arranged at predetermined intervals.

An object of the present disclosure is to provide a correction method, a measurement method, and a head-mounted display system for reducing a data amount of distortion correction.

Solution to Problem

A correction method according to the present disclosure includes: acquiring, by processing circuitry of a head-mounted display, a projection angle of a dot of a correction test pattern projected through an imaging lens, the projection angle being calculated based on the correction test pattern obtained by imaging a reference test pattern by the imaging lens through an adjustment lens for adjusting a visual characteristic of a user, the dot of the correction test pattern corresponding to a dot of the reference test pattern, the reference test pattern including one dot disposed on a reference point and at least one dot disposed on each of a plurality of straight lines extending in different directions from the reference point; and correcting, by the processing circuitry, a distortion of a virtual space image based on the projection angle corresponding to the dot of the reference test pattern, the distortion being caused by the adjustment lens.

A measurement method according to the present disclosure includes: displaying, by processing circuitry of a head-mounted display, a virtual space image on a display section, the virtual space image being formed such that a size of a range indicator indicating a range in a projection plane is changeable in a state where a virtual camera and the projection plane are maintained at a constant distance to each other; and measuring, by the processing circuitry, a viewing angle of a user based on the size of the range indicator by changing the size of the range indicator depending on a range of a field-of-view image in the virtual space image.

A correction method according to the present disclosure includes: adjusting, by processing circuitry of a head-mounted display, a visual characteristic of each of a right eye and a left eye of a user by a right-eye adjustment lens and a left-eye adjustment lens disposed between the right eye and the left eye of the user and a display section; measuring, by the processing circuitry, a viewing angle of each of the right eye and the left eye of the user; and correcting, by the processing circuitry, a size of a right-eye virtual space image and a size of a left-eye virtual space image based on the viewing angle of the right eye and the viewing angle of the left eye, the right-eye virtual space image being displayed on the display section corresponding to the right eye, the left-eye virtual space image being displayed on the display section corresponding to the left eye.

A head-mounted display system according to the present disclosure includes: a memory that stores a projection angle of a dot of a correction test pattern projected through an imaging lens, the projection angle being calculated based on the correction test pattern obtained by imaging a reference test pattern by the imaging lens through an adjustment lens for adjusting a visual characteristic of a user, the dot of the correction test pattern corresponding to a dot of the reference test pattern, the reference test pattern including one dot disposed on a reference point and at least one dot disposed on each of a plurality of straight lines extending in different directions from the reference point; and processing circuitry that corrects a distortion of a virtual space image based on the projection angle corresponding to the dot of the reference test pattern, the distortion being caused by the adjustment lens.

A head-mounted display system according to the present disclosure includes: a display that displays a virtual space image formed such that a size of a range indicator indicating a range in a projection plane is changeable in a state where a virtual camera and the projection plane are maintained at a constant distance to each other; and processing circuitry that measures a viewing angle of a user by changing the size of the range indicator depending on a range of a field-of-view image in the virtual space image.

Advantageous Effects of Invention

According to the present disclosure, it is possible to reduce the amount of distortion correction data.

Brief Description of Drawings

FIG. 1 illustrates an outline of the present disclosure;
FIG. 2 illustrates a configuration of a head-mounted display system according to Embodiment 1 of the present disclosure;
FIG. 3 illustrates a software configuration of the head-mounted display system;
FIG. 4 illustrates a configuration of a visual characteristic adjustment mechanism;
FIG. 5 illustrates a state in which distortion of a virtual space image is corrected;
FIG. 6 illustrates a state of occurrence of distortions different between a virtual space image for the right eye and a virtual space image for the left eye;
FIG. 7 illustrates a state in which an image captured by a virtual camera is displayed on a projection plane;
FIG. 8A illustrates how the size of a range indicator is changed in accordance with the range of a field-of-view image;
FIG. 8B illustrates how the size of the range indicator is changed in accordance with the range of the field-of-view image;
FIG. 9 is a flowchart illustrating a method of acquiring correction data;
FIG. 10A illustrates a configuration of a reference test pattern;
FIG. 10B illustrates a configuration of a correction test pattern;
FIG. 11 illustrates a state in which positions of dots are detected in the correction test pattern;
FIG. 12 illustrates a state in which a projection angle is calculated based on a position of a dot;
FIG. 13 is a flowchart illustrating a correction method for correcting virtual space images in a HMD system;
FIG. 14 is a flowchart illustrating a measurement method for measuring a viewing angle;
FIG. 15 is a flowchart specifically illustrating a measurement method for measuring a viewing angle;
FIG. 16 is a flowchart illustrating a method for correcting a size of a virtual space image;
FIG. 17A illustrates a state in which the size of the virtual space image is corrected;
FIG. 17B illustrates the state in which the size of the virtual space image is corrected;
FIG. 18 is a flowchart illustrating a method of finely adjusting a display on the display section;
FIG. 19 illustrates correction data;
FIG. 20 illustrates a configuration of a movement mechanism according to Embodiment 2;
FIG. 21 illustrates a configuration of a movement mechanism according to a variation of Embodiment 2; and
FIG. 22 illustrates a configuration of a movement mechanism according to another variation of Embodiment 2.

Description of Embodiments

Hereinafter, an embodiment according to the present disclosure will be described with reference to the accompanying drawings.

(Embodiment 1)

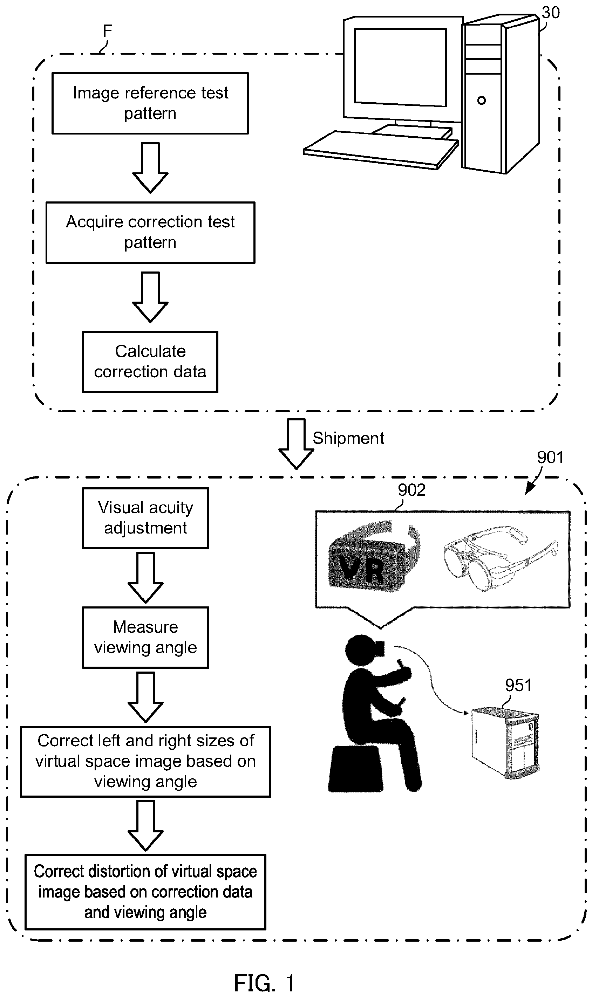

FIG. 1 illustrates an outline of the present disclosure. Prior to shipment of head-mounted display (HMD) system 901, correction data for correcting virtual space images is created. Specifically, in factory F or the like, computer 30 images a reference test pattern with a fisheye lens through an adjustment lens that adjusts the visual acuity of the user. Accordingly, computer 30 acquires a correction test pattern in which distortion aberration of the adjustment lens is reflected. Then, the computer creates correction data for correcting the distortion of a virtual space image based on the correction test pattern. The correction data created is shipped, for example, to stores and the like with HMD system 901. Alternatively, correction data for an HMD system used with an identification information, such as a serial number, that is unique to each HMD system may be downloaded over a network.

When the user uses HMD system 901, an adjustment lens built in head-mounted display (HMD) 902 is moved to adjust the visual acuity of the user and the like. The movement of the adjustment lens in accordance with the visual acuity adjustment may cause distortion in the virtual space image viewed by the user. Further, when the movement positions of the right-eye adjustment lens and the left-eye adjustment lens are different from each other, the sizes of the virtual space image visually recognized by the right eye and the left eye may be different from each other. Therefore, HMD system 901 measures the viewing angle of the user, which changes in accordance with the movement of the adjustment lenses. In addition, HMD system 901 corrects the sizes of the right-eye virtual space image and the left-eye virtual space image based on the viewing angle. In addition, HMD system 901 corrects the distortion of the virtual space images based on the correction data and the viewing angle.

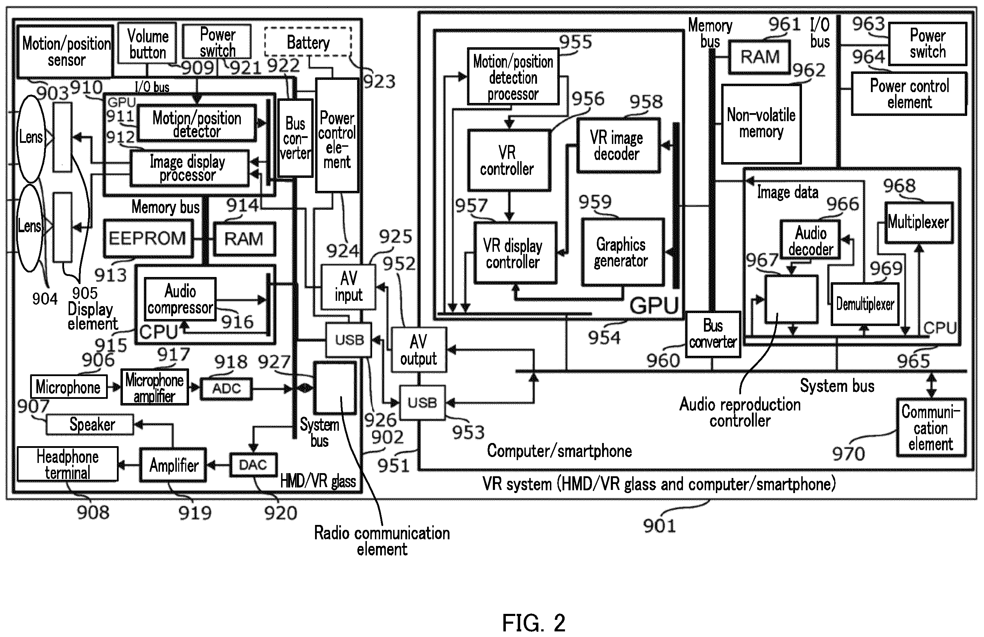

FIG. 2 illustrates a configuration of head-mounted display (HMD) system 901 according to Embodiment 1 of the present disclosure. Head-mounted display system 901 includes computer or smartphone 951 and head-mounted display 902 connected thereto. Examples of HMD 902 include a virtual reality (VR) glass.

The main configuration of computer/smartphone 951 in HMD system 901 includes: high-speed communication element 970 such as WiFi (registered trademark) or Ethernet (registered trademark) for connecting to an observation system; GPU 954 for mainly performs processing on image data or graphics; CPU 965 for performing general data processing and overall control on computer/smartphone 951; non-volatile memory 962 such as a hard disk or flash memory for storing programs for operating CPU 965 or GPU 954; RAM 961 used for storage of data for operation of CPU 965 or GPU 954; power control element 964 for supplying power to power switch 963 or each component; AV output 952 for outputting image and audio signals to HMD 902; I/F for control on HMD 902 and for obtainment of data therefrom (USB 953 or the like); a memory bus for connection of RAM 961 or non-volatile memory 962 to allow access of CPU 965 or GPU 954; a system bus for CPU 965 or GPU 954 to access AV output 952, USB 953, and communication element 970; bus connection (bus converter 960) that connects the system bus to the memory bus; a display apparatus (not illustrated); an input apparatus for manipulation; another general-purpose I/F; and the like.

For example, GPU 954 is used to implement motion/position detection processor 955, VR controller 956, VR display controller 957, VR image decoder 958, graphics generator 959, and the like. Further, for example, CPU 965 is used to implement audio decoder 966, audio reproduction controller 967, multiplexer 968, and demultiplexer 969.

AV output 952 and USB 953 can also be replaced by an I/F such as, e.g., USB Type-C (registered trademark), which is a high-speed bi-directional I/F. In such a case, HMD 902 is connected via the same I/F or via a converter that converts the I/F. Generally, when an image is transmitted via USB 953, an appropriate image compression is performed by CPU 965 or GPU 954 in order to compress a data amount by performing appropriate compression, and the image is transmitted to HMD 902 through USB 953.

The main configuration of HMD 902 in HMD system 901 includes: an audio input including microphone 906 for inputting sound, microphone amplifier 917, and ADC 918; an audio output including speaker 907 or headphone terminal 908, amplifier 919, and DAC 920; two sets of adjustment lenses 904 for the user to view a VR image; display section 905 including display elements; motion/position sensor 903 including a motion/position detector and an azimuth detector each including a gyro sensor, a camera, an ultrasonic microphone, or the like; radio communication element 927 such as Bluetooth for communicating with a controller (not illustrated); volume button 909 for controlling the output volume from the audio output; power switch 921 for turning on/off the power of HMD 902; power control element 924 for power control; a memory bus for connecting Electrical Erasable Programmable ROM (EEPROM) 913, RAM 914, and an SD card to GPU 910 and CPU 915 to exchange data with the memory; AV input 925 for receiving image and audio signals from CPU 915, GPU910, radio communication element 927, computer/smartphone 951; an I/F such as USB 926 for receiving a control signal from computer/smartphone 951 and sending image signals, audio signals, and motion/position data; CPU 915 for mainly performing audio compression (implemented by audio compressor 916), control of a switch, a power supply, or the like, or control of entire HMD 902; GPU 910 for mainly performing image display processing (implemented by image display processor 912) for adjusting the image to the VR display and motion/position detection (implemented by motion/position detector 911) for correcting and generating motion/position information to be transmitted to computer/smartphone 951 from information from motion/position sensor 903; EEPROM 913 for storing programs and data for operating CPU 915 and GPU 910; RAM 914 for storing data during operation of CPU 915 and GPU 910; a memory bus for connecting CPU 915, GPU 910, RAM 914, and EEPROM 913 to one another; a system bus to which CPU 915, GPU 910, USB 926, the audio input, the audio output, and radio communication element 927 are connected and which performs control or data exchange; an I/O bus for performing control or low-speed data exchange, including the above-described button or power control element 924, motion/position sensor 903, an audio input and an audio output (not illustrated), a VR imaging camera, and the like; and some bus converters 922 for connecting the buses to one another.

Image data from AV input 925 is high in data volume and high in speed, and may thus be directly taken into GPU 910 in a case where the system bus is not fast enough.

The image information captured by the camera of motion/position sensor 903 may be sent to the display elements as information for the user to confirm the surroundings of HMD 902, or may be sent to computer/smartphone 951 through USB 926 to monitor whether the user is in a dangerous condition.

Power control element 924 receives power from USB 926 or AV input 925, stabilizes the voltage, manages the battery capacity, and supplies power to all components (not illustrated). Further, battery 923 may be provided inside or outside, and power control element 924 may be connected to battery 923.

The state of a button or cursor of a controller (not illustrated) is acquired by CPU 915 through radio communication element 927, and is used for button operations, moves, and operations of applications in VR space. The position and orientation of the controller are detected by a camera, ultrasonic sensor, or the like in the motion/position detector, appropriately processed by the motion/position sensor, then used for control in CPU 915, and also sent to computer/smartphone 951 through USB 926 to be used for programs executed by CPU 915 or rendering graphics or image-processing executed by GPU 910.

Note that HMD system 901 may be configured by incorporating the functions of computer/smartphone 951 into HMD 902. HMD system 901 may also be configured by incorporating the functions of computer/smartphone 951 into a server and connecting the server to HMD 902 via a network.

Next, software for controlling HMD system 901 will be described.

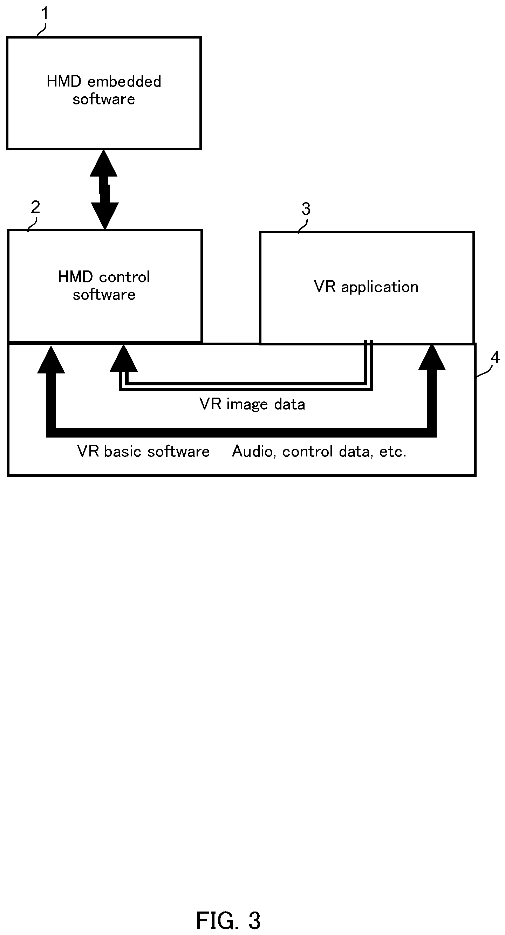

FIG. 3 illustrates a software configuration of HMD system 901. HMD system 901 includes HMD embedded software 1, HMD control software 2, VR application 3, and VR basic software 4.

HMD embedded software 1 operates on HMD 902, and displays an image on display section 905, inputs and outputs audio, tracks the head by detecting the position/direction of HMD 902, and detects an operation amount or a position of an operation button or a controller.

HMD control software 2, VR application 3, and VR basic software 4 operate on computer/smartphone 951. At this time, HMD control software 2 and VR application 3 may operate using functions of VR basic software 4.

HMD control software 2 performs basic control of HMD 902, receives an image/audio from VR application 3, and transmits the image/audio to HMD 902. HMD control software 2 receives, from HMD 902, the audio data received by the microphone or the like, head tracking information, tracking information on the controller, and the like, and transmits the received audio data to VR application 3.

VR application 3 reproduces the image/audio from a file or generates a 3DCG for HMD 902, and transmits the 3DCG to HMD 902 using the functions of VR basic software.

VR basic software 4 receives normalized head tracking information or normalized tracking information on the controller, and changes the reproduced image/audio or 3DCG in accordance with the information. VR basic software 4 has a function of allowing HMD 902 to be connected to a variety of VR applications 3, such as applications of transforming image/audio to be sent to HMD 902 or normalizing the head tracking information received from HMD 902 or the tracking information on the controller to a predetermined format and sending the normalized information to VR application 3, depending on the characteristics of HMD 902.

In addition to the above functions, HMD embedded software 1 and HMD control software 2 perform communication settings between HMD 902 and computer/smartphone 951 at the time of power ON, initialization of HMD 902, processes at the time of power OFF, and the like.

In addition, VR basic software 4 may correct the distortion of a virtual space image displayed on HMD 902. For example, a required parameter is set through HMD control software 2 at the time of power ON of HMD system 901 or at the time of changing the default setting, and a distortion correction status is changed in accordance with the required parameter, whereby correction is performed in accordance with the characteristics of HMD 902.

Here, GPU 954 including VR display controller 957 or GPU 910 including image display processor 912 is a component of processing circuitry of the present disclosure. Non-volatile memory 962 or EEPROM 913 is a component of a memory of the present disclosure. Display section 905 is a component of a display of the present disclosure.

Next, a visual characteristic adjustment mechanism for adjusting the visual characteristic of the user in HMD 902 will be described. The visual characteristic adjustment mechanism includes GPU 910 and CPU 915 of HMD 902, adjustment lenses 904, and the like.

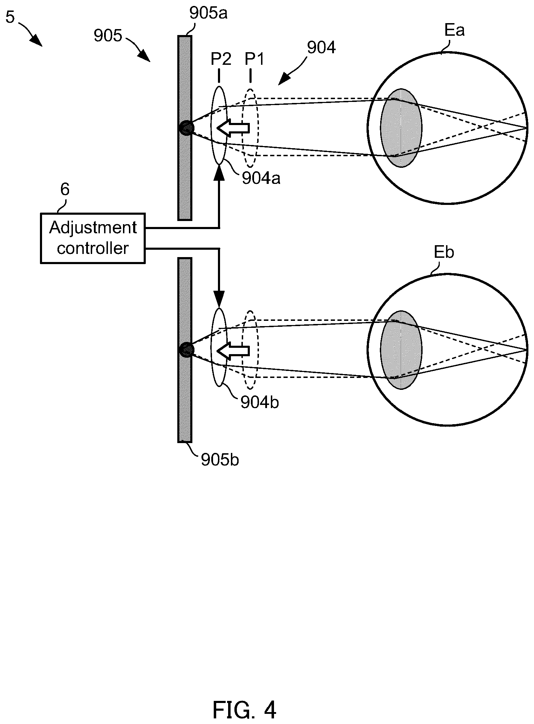

FIG. 4 illustrates a configuration of visual characteristic adjustment mechanism 5. Visual characteristic adjustment mechanism 5 may be configured to adjust the visual acuity of the user, for example. Visual characteristic adjustment mechanism 5 includes adjustment lenses 904 and adjustment controller 6. Display section 905 includes right-eye display section 905a and left-eye display section 905b. Right-eye display section 905a is disposed corresponding to right eye Ea of the user, and displays a right-eye virtual space image. Left-eye display section 905b is disposed corresponding to left eye Eb of the user, and displays a left-eye virtual space image.

Adjustment lenses 904 include right-eye adjustment lens 904a and left-eye adjustment lens 904b. Right-eye adjustment lens 904a adjusts the visual acuity of right eye Ea, and is disposed between right eye Ea of the user and right-eye display section 905a. For example, right-eye adjustment lens 904a adjusts the visual acuity of right eye Ea by moving in the front-rear direction with respect to right eye Ea. Note that the visual acuity of right eye Ea may be adjusted by arranging a plurality of right-eye adjustment lens 904a and changing the number of lenses.

Left-eye adjustment lens 904b adjusts the visual acuity of left eye Eb, and is disposed between left eye Eb of the user and left-eye display section 905b. Left-eye adjustment lens 904b has the same configuration as that of right-eye adjustment lens 904a, and therefore description thereof will be omitted.

Adjustment controller 6 is connected to right-eye adjustment lens 904a and left-eye adjustment lens 904b. Further, adjustment controller 6 is connected to, for example, CPU 915, and adjusts the movement positions of right-eye adjustment lens 904a and left-eye adjustment lens 904b in response to a user's operation (not illustrated). For example, when right-eye adjustment lens 904a is present in position P1, it is assumed that the focus of the light incident on right-eye adjustment lens 904a from right-eye display section 905a deviates from the retina on right eye Ea. Upon this assumption, adjustment controller 6 moves right-eye adjustment lens 904a to position P2 allowing light to focus on the retina of right eye Ea in response to a user's operation. Similarly, adjustment controller 6 moves left-eye adjustment lens 904b in position P2 allowing light to focus on the retina of left eye Eb in response to a user's operation. In this case, when the visual acuity of right eye Ea and the visual acuity of left eye Eb are different, right-eye adjustment lens 904a and left-eye adjustment lens 904b move to different positions P2. As described above, adjustment controller 6 adjusts the visual acuity of right eye Ea and the visual acuity of left eye Eb of the user. Thus, the user can clearly visually recognize the virtual space image displayed on display section 905. Note that the visual acuity adjustment may be performed not only by adjusting the positions of adjustment lenses 904 but also by replacing adjustment lenses 904.

Note that the visual characteristics are not limited to visual acuity. The visual characteristics include, for example, astigmatism or light quantity adjustment. Visual characteristic adjustment mechanism 5 may adjust the astigmatism by, for example, exchanging a plurality of adjustment lenses 904 for astigmatism. Further, in cases of a user who is difficult to adjust the amount of light, for example, a user who needs sunglasses and whose right eye Ea and left eye Eb have difference transmittances, visual characteristic adjustment mechanism 5 may adjust the brightness, the color, or the like of the virtual space image in response to an operation by the user. Further, visual characteristic adjustment mechanism 5 may adjust the light amount of the virtual space image by exchanging a plurality of adjustment lenses 904 having different light transmittances.

In addition, an interpupillary distance adjustment mechanism for adjusting the user's interpupillary distance (IPD) may also be disposed in HMD 902. The interpupillary distance adjustment mechanism may adjust the interpupillary distance by mechanically changing the widths of the left and right lens barrels in response to an operation by the user, for example. The interpupillary distance adjustment mechanism may adjust the interpupillary distance by changing the virtual space image displayed on display section 905.

Here, visual characteristic adjustment mechanism 5 or the interpupillary distance adjustment mechanism may perform adjustment before measuring the viewing angle of the user. This makes it possible to accurately measure the viewing angle of the user.

In addition, at least one of visual characteristic adjustment mechanism 5 and the interpupillary distance adjustment mechanism may be configured to adjust the visual characteristic or the interpupillary distance in a state where HMD 902 is worn by the user. This allows the user to easily adjust the visual characteristic or the interpupillary distance.

Next, distortion correction of the virtual space image will be described.

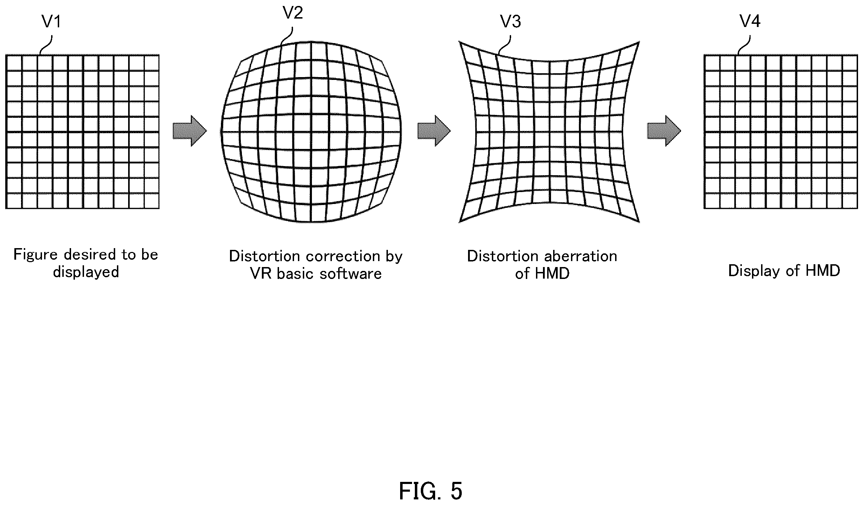

FIG. 5 illustrates a method for correcting distortion of a virtual space image. When desired virtual space image V1 is displayed on display section 905 of HMD 902, virtual space image V1 is visually recognized by the user through adjustment lenses 904. Accordingly, the visual recognition is considered to be performed by the user while the distortion is caused by the distortion aberration of adjustment lenses 904 as seen in virtual space image V3. Therefore, VR basic software 4 (VR display controller 957) generally generates virtual space image V2 in which distortion is generated in the opposite direction depending on the distortion aberration of adjustment lenses 904, to perform distortion correction on virtual space image V1. When virtual space image V2 is displayed on display section 905, the distortion of virtual space image V2 is eliminated through adjustment lenses 904, and virtual space image V4 substantially similar to virtual space image V1 is visually recognized by the user.

However, the distortion aberration of virtual space image V3 may change with the movement or the like of adjustment lenses 904. For example, it is conceivable that the distortion aberration of virtual space image V3 changes with the movement of adjustment lenses 904 by visual characteristic adjustment mechanism 5 or the interpupillary distance adjustment mechanism. Therefore, in the present disclosure, the distortion correction may be performed on virtual space image V1 based on the distortion aberration of adjustment lenses 904 that changes with the movement of adjustment lenses 904.

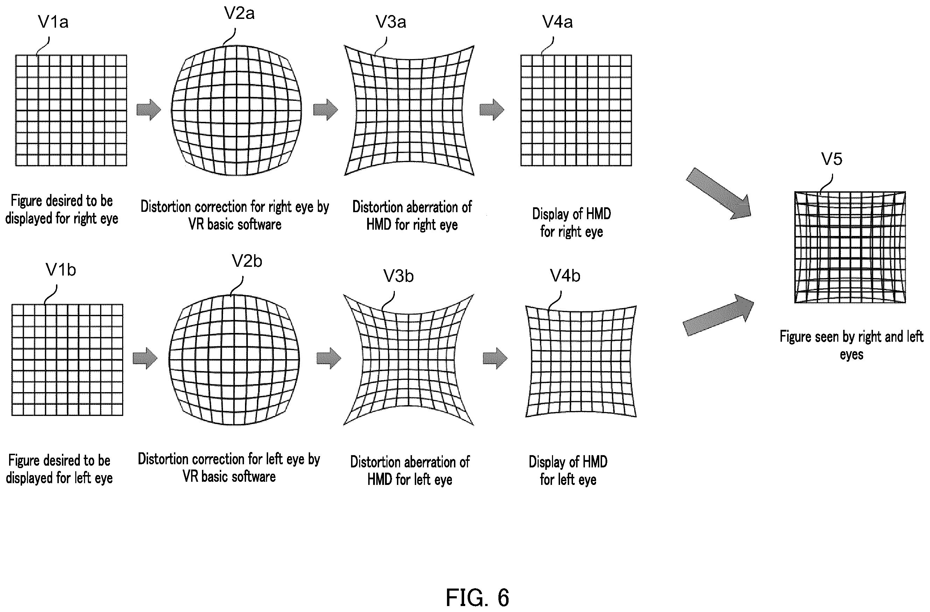

In this case, movement position P2 of right-eye adjustment lens 904a may differ from movement position P2 of left-eye adjustment lens 904b. For example, when the visual acuity of right eye Ea and the visual acuity of left eye Eb of the user are different from each other, right-eye adjustment lens 904a and left-eye adjustment lens 904b are moved to different positions P2. The distortion aberration of right-eye adjustment lens 904a and the distortion aberration of left-eye adjustment lens 904b differ from each other depending on their movement positions P2. For example, as illustrated in FIG. 6, when virtual space image V1a is displayed on right-eye display section 905a, distortion occurs as in virtual space image V3a, while when virtual space image V1b is displayed on left-eye display section 905b, distortion different from that in virtual space image V3a depending on the difference between movement positions P2 of right-eye adjustment lens 904a and left-eye adjustment lens 904b occurs as in virtual space image V3b. Therefore, when virtual space image V2a and virtual space image V2b subjected to the same distortion correction are displayed on right-eye display section 905a and left-eye display section 905b, virtual space image V4a and virtual space image V4b different from each other are generated through right-eye adjustment lens 904a and left-eye adjustment lens 904b. Then, virtual space image V5 obtained by merging virtual space image V4a and virtual space image V4b differing from each other is visually recognized by the user. To avoid this, in the present disclosure, the distortion correction may be performed independently on virtual space image V1a and virtual space image V1b based on movement position P2 of each of right-eye adjustment lens 904a and left-eye adjustment lens 904b.

In addition, virtual space image V4a and virtual space image V4b are generated with different sizes depending on movement positions P2 of right-eye adjustment lens 904a and left-eye adjustment lens 904b. Therefore, in the present disclosure, the sizes of virtual space image V1a and virtual space image V1b may be corrected based on movement positions P2 of right-eye adjustment lens 904a and left-eye adjustment lens 904b.

Here, by correctly providing VR basic software 4 with the parameters relating to the distortion correction that change with the movement of right-eye adjustment lens 904a and the parameters relating to the distortion correction that change with the movement of left-eye adjustment lens 904b, it is possible to allow the user to visually recognize virtual space image V4a and virtual space image V4b having the same shape. The same applies to the sizes of virtual space image V4a and virtual space image V4b.

Further, the parameters related to the distortion corrections are determined by designing the optical system of HMD 902. Therefore, if position P2 of right-eye adjustment lens 904a and position P2 of left-eye adjustment lens 904b can be correctly known, it is possible to calculate the parameters related to the distortion corrections. In the case of adjusting the visual acuity by changing the number of lenses, when the optical characteristics of the lenses can be correctly known, it is possible to calculate the parameters related to the distortion corrections.

Next, a methods for detecting movement positions P2 of adjustment lenses 904 will be described.

Movement positions P2 of adjustment lenses 904 may be detected based on, for example, a viewing angle (FOV) of the user.

Since the viewing angle of the user and the size of the image change with the movement of adjustment lenses 904, movement positions P2 of adjustment lenses 904 can be detected based on these values. Here, the viewing angle is an angle of the attainable field of view of the user through HMD 902, which can be calculated from the distance between the position where the image is displayed and the virtual camera corresponding to the user's eyes in the virtual space and the size of the image that the user is viewing.

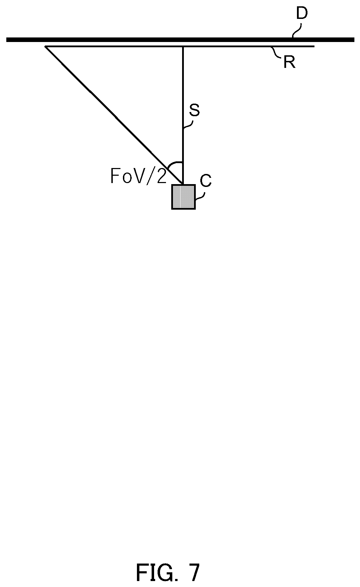

Specifically, as illustrated in FIG. 7, the image to be displayed on HMD 902 is an image captured by virtual camera C placed at the position of the user's eyes and is displayed three-dimensionally on projection plane D of display section 905. The virtual space image is formed so that the size of range indicator R indicating a range in projection plane D is changeable while virtual camera C and projection plane D are maintained at constant distance S to each other.

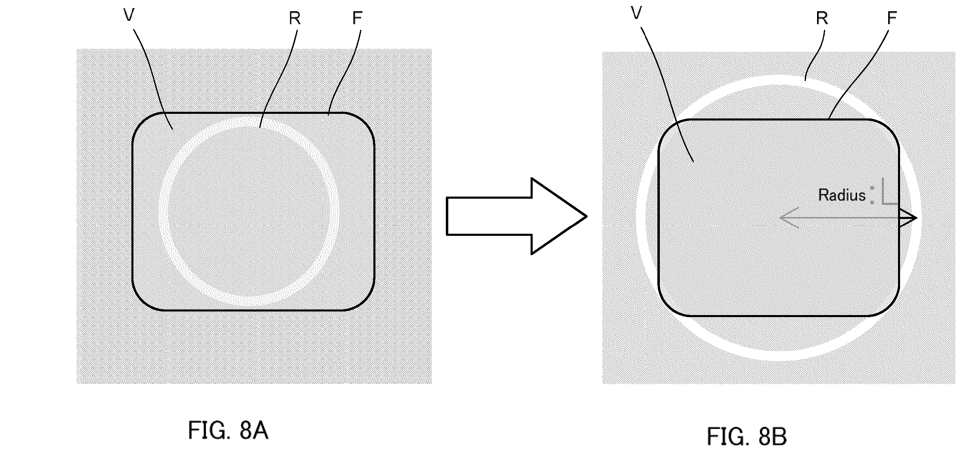

For example, as illustrated in FIG. 8A, after moving adjustment lenses 904 and performing visual acuity adjustment, VR display controller 957 causes display section 905 to display virtual space image V including range indicator R. Here, range indicator R may be formed to indicate a range in a circular shape, for example. Subsequently, as illustrated in FIG. 8B, the user operates the controller or the like to change the size of range indicator R according to the range of field-of-view image F in virtual space image V. Here, field-of-view image F is a range (visible range) of virtual space image V which is visible to the user. In general, field-of-view image F is circular, but is represented by a rounded rectangle as a distorted example.

Accordingly, VR display controller 957 measures the viewing angle of the user based on the size of changed range indicator R. For example, VR display controller 957 may acquire range information (for example, radius) on range indicator R when the size of range indicator R is changed so that at least a part of range indicator R overlaps the end of field-of-view image F, and calculate the viewing angle of the user based on the range information. At this time, VR display controller 957 may calculate the viewing angle of the user based on the range information when a portion of the end of field-of-view image F which is farthest from the center (portions of the rounded corners of the rounded rectangle) overlaps range indicator R.

Specifically, the viewing angle of the user may be calculated from following Equation 1 based on the size of range indicator R changed in accordance with the range of field-of-view image F and distance S (distance S between virtual camera C and projection plane D):

$$\text{Viewing angle} = \arctan(L/S) \times 2 \qquad \text{... (Equation 1)}.$$

Note that VR display controller 957 measures the viewing angle by displaying circular range indicator R, but the present invention is not limited thereto as long as the viewing angle can be measured. For example, VR display controller 957 may measure the viewing angle by displaying a test chart on which scale marks are formed on a straight line extending obliquely. In this case, a predetermined mark, such as, e.g., a numerical value or a label, may be displayed for the scale marks. Specifically, a test chart having a size covering the field-of-view image is created, and after the visual acuity adjustment is performed by moving adjustment lenses 904, the test chart is displayed in front of the user. Subsequently, the user operates the controller to change the size of the test chart and read a scale mark of the test chart which overlaps the end of the field-of-view image. VR display controller 957 measures the size of the field-of-view image based on the value of the scale mark of the test chart, and calculates the user's viewing angle from the size of the field-of-view image. The test chart may include two axes extending in the up-down direction and the left-right direction at the center of the field-of-view image, and two straight lines extending at an angle of 45 degrees with respect to the two axes. VR display controller 957 may measure the size of the field-of-view image from four points at which the two axes of the test chart overlap with ends of the field-of-view image and four points at which the two straight lines of the test chart overlap with ends (four corners) of the field-of-view image. In addition, VR display controller 957 may simply calculate the size of the field-of-view image from two points at which the axis extending in the up-down direction overlaps ends of the field-of-view image, two points at which the axis extending in the left-right direction overlaps ends of the field-of-view image, or two points at which ends of the straight lines extending in the oblique direction overlap ends of the field-of-view image. Then, the viewing angle is calculated from the size of the field-of-view image and the distance from the user to projection plane D.

In addition, VR display controller 957 may measure the viewing angle by displaying a test chart including a plurality of circles arranged concentrically with respect to the center of the field-of-view image. The user can measure the size of the field-of-view image without changing the size of the test chart by reading a specific circle of the test chart that overlaps the end of the field-of-view image.

The viewing angle thus obtained reflects movement positions P2 of adjustment lenses 904. Therefore, the distortion aberration of adjustment lenses 904 can be calculated based on the viewing angle, and distortion correction can be performed on virtual space image V1 based on the degree of the distortions.

Next, a correction method for correcting distortion of the virtual space image will be described.

The outline of the correction method is described. To begin with, for right-eye display section 905a and the left-eye display section 905b of HMD 902, distortion correction is adjusted with high accuracy using a test pattern and resulting correction data is written in a configuration file corresponding to HMD 902. The configuration file is stored in a recording medium and HMD 902 is shipped with the recording medium. Visibility adjustment does not affect the subsequent steps. Next, the user performs initial distortion correction using the correction data for distortion correction stored in the configuration file at the time of initial setting of HMD 902 or at any timing, and then appropriately performs visibility adjustment and IPD adjustment. In addition, by measuring the viewing angle using the test pattern and writing the viewing angle into the configuration file corresponding to HMD 902, it is possible to appropriately perform the distortion correction even when the visual acuity of each of the right eye and the left eye is adjusted. Further, by adjusting the sizes of the images displayed on right-eye display section 905a and left-eye display section 905b with an enlargement/reduction function based on the viewing angles of the right eye and the left eye, and by writing the enlargement/reduction ratio into the configuration file corresponding to HMD 902, the images with the same size are displayed respectively on right-eye display section 905a and left-eye display section 905b. Thus, HMD 902 can be used such that not only the distortions but also the sizes of the images are constantly adjusted to be the same between the left and right eyes. When the user feels uncomfortable after the adjustment, a function of finely adjusting the distortion and the enlargement/reduction with an appropriate user interface (UI) may be provided. Similarly, by having a function of finely adjusting each of right-eye display section 905a and left-eye display section 905b with respect to color tone or brightness, it is possible to absorb, to a certain extent, a difference in appearance between the right eye and the left eye of a user with eyeglass correction, for example. Further, by associating a profile for each user with a configuration file and selecting a profile number of the user, for example, when using HMD 902, constantly adjusted HMD 902 can be used even when a plurality of users use the HMD.

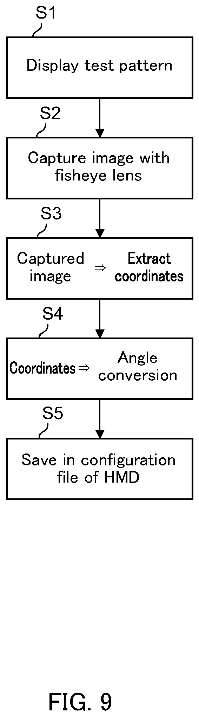

Next, the correction method will be specifically described. FIG. 9 illustrates a flowchart of a process for acquiring correction data serving as an index of distortion correction, prior to shipment of HMD system 901.

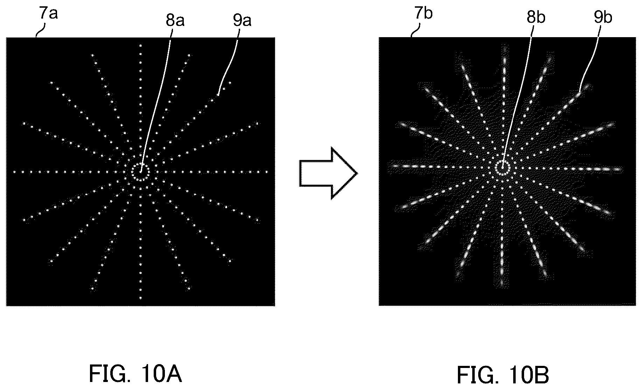

To begin with, in step S1, computer 30 causes display section 905 to display a reference test pattern. The reference test pattern may be displayed on each of right-eye display section 905a and left-eye display section 905b, for example. As illustrated in FIG. 10A, reference test pattern 7a includes at least three dots 9a, each of which is disposed on reference point 8a or a plurality of straight lines extending differently from reference point 8a. Specifically, dots 9a are disposed to be aligned along a plurality of straight lines extending radially from reference point 8a. That is, dots 9a are disposed on a plurality of straight lines arranged equiangularly around reference point 8a. Therefore, dots 9a are disposed to become circumferentially sparser with respect to reference point 8a toward the outside from reference point 8a. Accordingly, dots 9a are disposed densely in the vicinity of reference point 8a that is more important in the virtual space image, and thus, HMD system 901 can accurately correct the important part of the virtual space image.

Note that the plurality of straight lines extending in the radial direction may be arranged at intervals of 45 degrees or less, for example, 22.5 degrees in the circumferential direction, from the viewpoint of balance between the calculation time and the accuracy. Further, the plurality of straight lines extending in the radial direction may be arranged at intervals preventing the straight lines from overlapping one another in an image captured by the fisheye lens described below. In addition, dots 9a may be arranged at about 16 points at equal intervals on one straight line from the viewpoint of balancing the calculation time and the accuracy. In addition, dots 9a may be arranged at intervals preventing the dots from overlapping one another in the image captured by the fisheye lens. In addition, dots 9a may be displayed, each with a round shape and a diameter of about 5 pixels from the viewpoint of balancing the detected angle and accuracy. In addition, dots 9a may be displayed in a size preventing the dots from overlapping one another in the image captured by the fisheye lens.

Subsequently, in step S2, computer 30 captures reference test pattern 7a displayed on display section 905 with the fisheye lens through adjustment lenses 904, thereby acquiring correction test pattern 7b as illustrated in FIG.10B. At this time, computer 30 captures reference test pattern 7a in such a manner that the center of the fisheye lens matches reference point 8a which is the center of reference test pattern 7a. Note that computer 30 does not need to make the distance from the fisheye lens to display section 905 coincide with distance S between the user and display section 905 in HMD 902, and may capture reference test pattern 7a at any distance.

Since correction test pattern 7b is captured through adjustment lenses 904, distortion aberration and chromatic aberration caused by adjustment lenses 904 are reflected in the correction test pattern. Further, the positions of dots 9b reflect a projection angle of reference test pattern 7a through the fisheye lens.

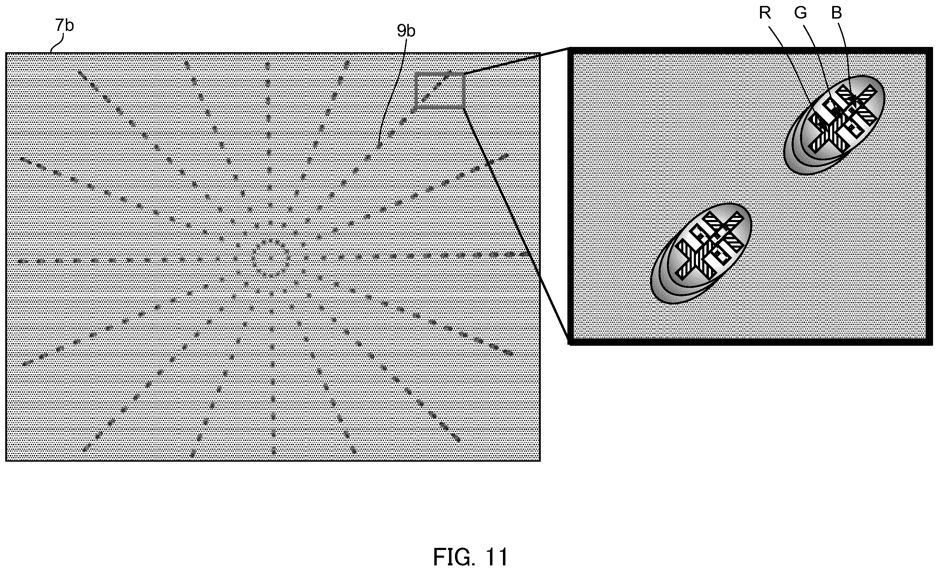

Subsequently, in step S3, computer 30 calculates the coordinates of dots 9b, that is, the positions with respect to reference point 8b, from correction test pattern 7b. For example, computer 30 may detect the contours of dots 9b and determine the centers of the contours as the positions of dots 9b. For example, as illustrated in FIG. 11, computer 30 extracts the contours of dots 9b by using a contour extraction function or the like. For example, computer 30 may extract the contours of Red (R), Green (G), and Blue (B) forming dots 9b. Here, the center of the contour of each color of RGB is defined as position R, G, B of each color of RGB of dot 9b, and positions R, G, and B are indicated by crosses.

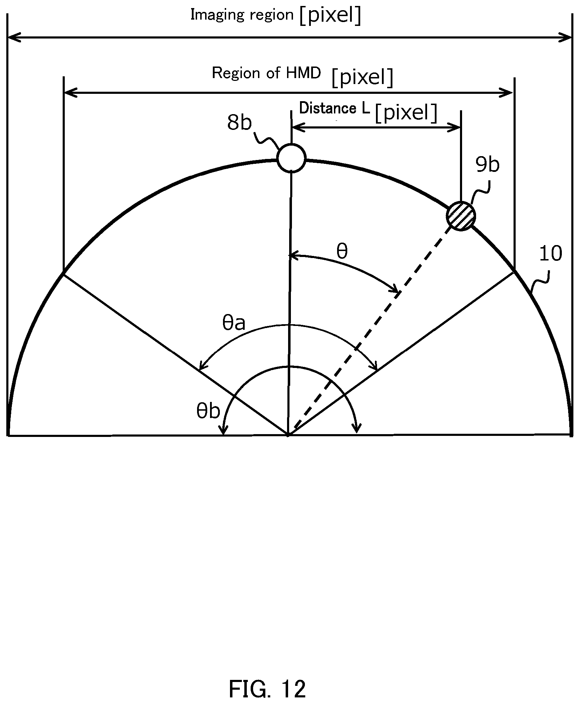

Then, in step S4, computer 30 calculates, based on the positions of dots 9b, the projection angles of dots 9b projected in correction test pattern 7b through the fisheye lens. For example, as illustrated in FIG. 12, projection angle $\theta$ of dot 9b is calculated from distance L from reference point 8b to dot 9b, the viewing angle of fisheye lens 10, and the number of pixels of the image. Specifically, projection angle $\theta$ is expressed by following Equation 2. In the equation, the region of HMD denotes the number of pixels of the region corresponding to the viewing angle of HMD 902 in a direction orthogonal to the optical axis. Further, viewing angle $\theta a$ of HMD is expressed by following Equation 3 based on the optical characteristics of fisheye lens 10. The imaging region denotes the number of pixels of the region corresponding to the viewing angle of fisheye lens 10 in the direction orthogonal to the optical axis.

$$\text{Projection angle } \theta = \text{distance L/region of HMD} \times \text{viewing angle } \theta a \text{ of HMD}$$

$$\text{... (Equation 2)}$$

$$\text{Viewing angle } \theta a \text{ of HMD} = \text{viewing angle } \theta b \text{ of fisheye lens} \times \text{region of HMD/imaging region} \qquad \text{(Equation 3)}$$

Here, viewing angle $\theta b$ of fisheye lens 10, the imaging region, and the region of HMD 902 are acquired in advance, and computer 30 calculates projection angle $\theta$ from Equations 2 and 3 based on these values. Projection angle $\theta$ represents the projection position through fisheye lens 10 depending on viewing angle $\theta a$. Projection angle $\theta$ is calculated for all dots 9b in correction test pattern 7b.

Subsequently, computer 30 creates correction data by associating calculated projection angles $\theta$ of dots 9b with the positions (for example, the distances) of dots 9a with respect to reference point 8a of reference test pattern 7a. Then, computer 30 saves the correction data in the configuration file of HMD 902 in step S5. This configuration file is stored in HMD 902 for shipment, for example.

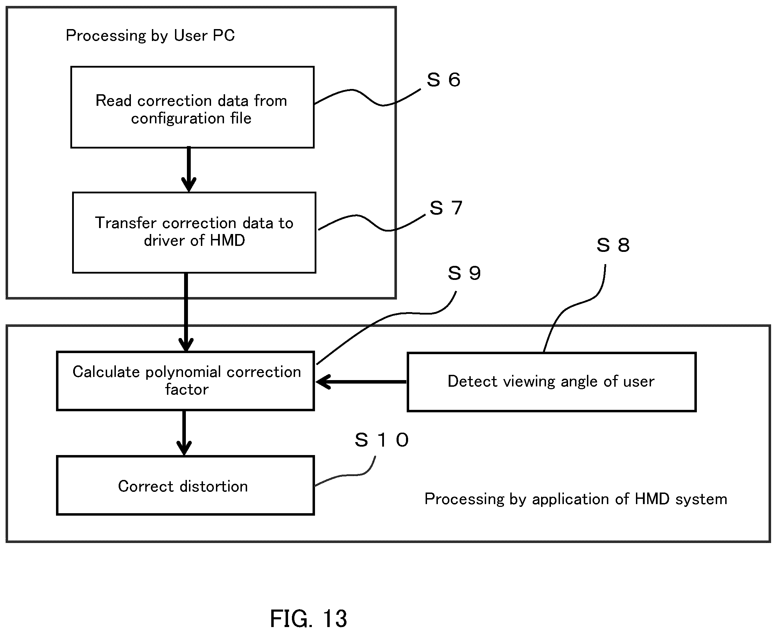

FIG. 13 illustrates a flowchart of a correction method for correcting a virtual space image performed after shipment of HMD system 901. Examples of the correction method include distortion correction and size correction.

The user operates computer/smartphone 951 and causes computer/smartphone 951 to read the correction data from the configuration file attached to HMD 902 in step S6. After reading the correction data, computer/smartphone 951 transmits the correction data to a driver of HMD 902 in step S7.

Subsequently, when HMD 902 is worn by the user, the user's visual characteristics, e.g., visual acuity, are adjusted, as illustrated in FIG. 4. Specifically, VR display controller 957 causes right-eye display section 905a and left-eye display section 905b to display a visual acuity adjustment image. Then, VR display controller 957 moves right-eye adjustment lens 904a and left-eye adjustment lens 904b in response to the user's operation so that the user can appropriately visually recognize the visual acuity adjustment image. Here, it is assumed that right-eye adjustment lens 904a and left-eye adjustment lens 904b are moved to different positions P2.

When right-eye adjustment lens 904a and left-eye adjustment lens 904b are moved, VR display controller 957 enters a viewing angle measurement mode for detecting a viewing angle by, for example, a button operation or menu operation by the user in step S8. Note that the viewing angle measurement mode may be performed in a curvature correction adjustment mode or a visual acuity and IPD adjustment mode.

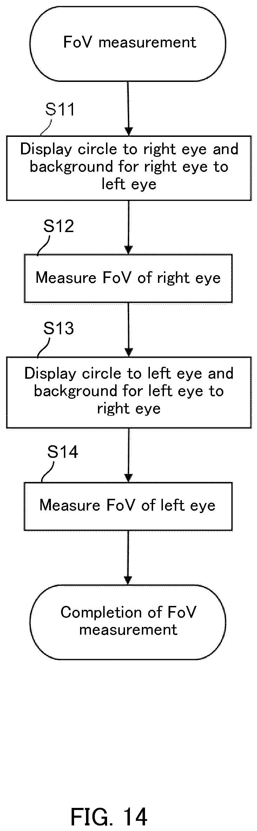

In the viewing angle measurement mode, the user selects, from right-eye display section 905a and left-eye display section 905b, a display on which the measurement of the viewing angle is performed first. For example, when right-eye display section 905a is selected, VR display controller 957 displays range indicator R having a predetermined size on right-eye display section 905a in step S11, while displaying a background image (an image other than range indicator R) for right-eye display section 905a on left-eye display section 905b as illustrated in FIG. 14. VR display controller 957 measures the viewing angle of right eye Ea in step S12. Similarly, VR display controller 957 displays range indicator R having a predetermined size on left-eye display section 905b in step S13, while displaying the background image for left-eye display section 905b on right-eye display section 905a. VR display controller 957 measures the viewing angle of left eye Eb in step S14.

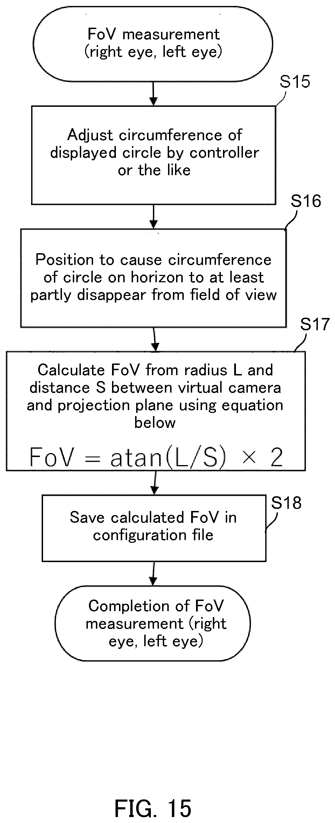

Specifically, the processes of steps S12 and S14 will be described in detail with reference to FIG. 15. VR display controller 957 adjusts the size of range indicator R indicated by the circular shape in response to the operation of the controller in step S15. For example, as illustrated in FIG. 8, VR display controller 957 adjusts the size of range indicator R in step S16 until a part of the circumference extends outside field-of-view image F. In this way, when the size of the field of view of the user (the size of range indicator R) is determined, VR display controller 957 calculates the viewing angle from above Equation 1 based on the size of range indicator R (for example, radius L) and distance S from virtual camera C to projection plane D in step S17. VR display controller 957 saves the calculated viewing angle in the configuration file in step S18. In this way, the viewing angle of the user is detected.

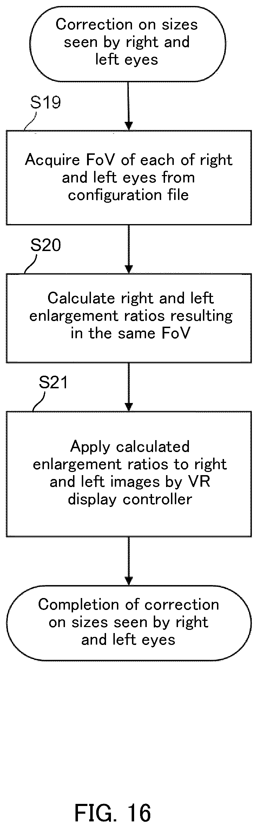

Subsequently, as illustrated in FIG. 16, VR display controller 957 acquires the viewing angle of right eye Ea and the viewing angle of left eye Eb from the configuration file. Here, when the viewing angle of right eye Ea differs from the viewing angle of left eye Eb, VR display controller 957 calculates an enlargement ratio of the viewing angle for making the viewing angle of right eye Ea and the viewing angle of left eye Eb equal to each other in step S20.

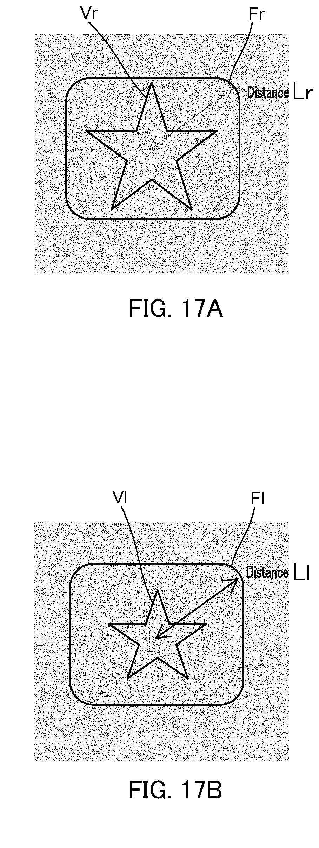

Then, in step S21, VR display controller 957 applies the enlargement ratio of the viewing angle to right-eye virtual space image Vr displayed on right-eye display section 905a and left-eye virtual space image Vl displayed on left-eye display section 905b, so that the sizes of right-eye virtual space image Vr and left-eye virtual space image Vl coincide with each other. For example, as illustrated in FIGS. 17A and 17B, when distance Lr from the center to the end of field-of-view image Fr visually recognized by right eye Ea is larger than distance Ll from the center to the end of field-of-view image Fl visually recognized by left eye Eb, the viewing angle of right eye Ea is larger than the viewing angle of left eye Eb. Therefore, VR display controller 957 enlarges or reduces virtual space images Vr and Vl displayed on right-eye display section 905a and left-eye display section 905b in accordance with the viewing angle of right eye Ea and the viewing angle of left eye Eb. For example, VR display controller 957 may multiply the size of left-eye virtual space image Vl by Ll/Lr while maintaining the size of right-eye virtual space image Vr. The correction on the sizes of virtual space images Vr and Vl seen by right eye Ea and left eye Eb is thus completed.

As described above, VR display controller 957 corrects the size of right-eye virtual space image Vr displayed on right-eye display section 905a and left-eye virtual space image Vl displayed on left-eye display section 905b based on the viewing angle of right eye Ea and the viewing angle of left eye Eb. Therefore, the sizes of right-eye virtual space image Vr and left-eye virtual space image Vl can be easily matched.

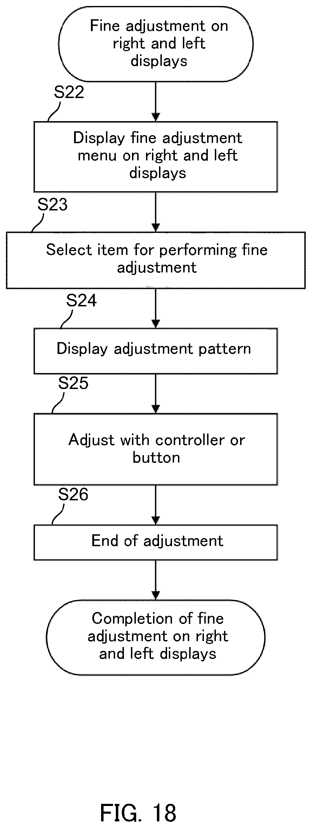

When there is a sense of discomfort due to a difference in color tone between the virtual space images V that are seen by right eye Ea and left eye Eb, or a difference in appearance from the appearance through the glasses that are ordinarily used, the left and right display properties may be finely adjusted as illustrated in FIG. 18. Examples of the display properties include the parameters for distortion correction, a color tone (for example, a color tone of RGB and a brightness), and the like. In step S22, VR display controller 957 displays a fine-adjustment menu for virtual space images V displayed on the left and right sides. When the user selects an item for performing fine adjustment in step S23, VR display controller 957 displays a predetermined adjustment pattern in step S24. Subsequently, VR display controller 957 adjusts the display properties of virtual space image V in response to the operation of the controller or the button in step S25. At this time, for fine adjustment of the display properties, it is appropriate to use an image that is regularly viewed, and it is thus desirable that the user set such an image for adjustment in advance. Further, it is also possible to use a test chart for image adjustment, and by setting several appropriate test charts in advance, it is possible to appropriately adjust an image. As a result, VR display controller 957 completes the adjustment of the display properties of virtual space image V in step S26.

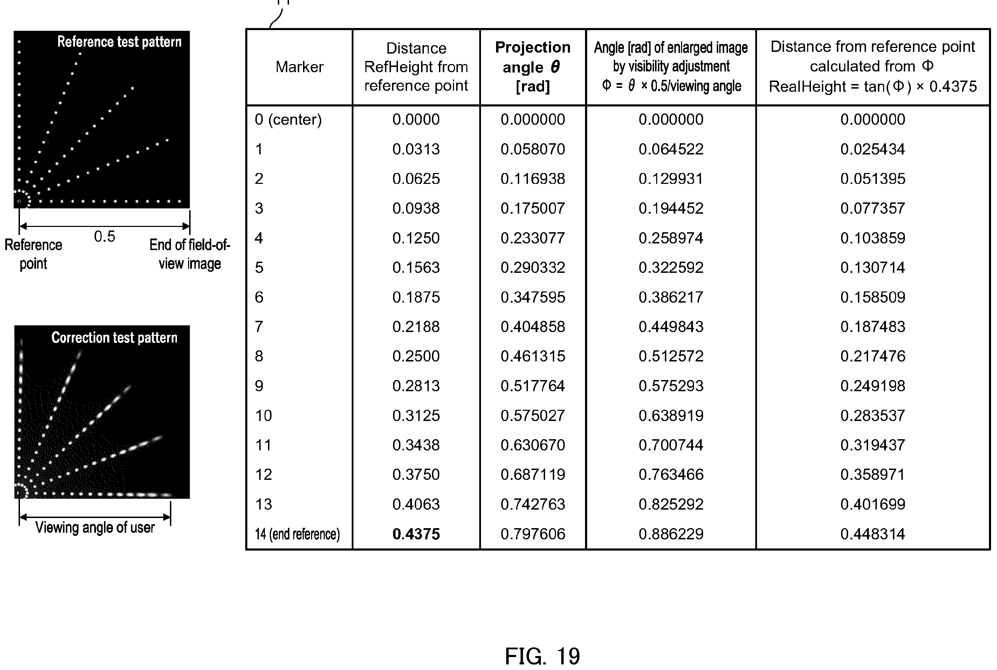

Subsequently, VR display controller 957 corrects the distortion of virtual space image V based on the positions (for example, the distances) of dots 9a with respect to reference point 8a in reference test pattern 7a and projection angles θ of dots 9b in correction test pattern 7b as stored in the correction data. For example, as illustrated in FIG. 19, the distances (Ref-Height) of dots 9a from reference point 8a in reference test pattern 7a and projection angles θ of dots 9b in correction test pattern 7b are stored in association with each other as correction data 11. The distortion correction is performed on each of right-eye virtual space image Vr and left-eye virtual space image Vl, but since the distortion correction is the same between the right and left images, a description will be given of the distortion correction on virtual space image V.

Upon acquisition of the viewing angle of the user (the viewing angle of right eye Ea and the viewing angle of left eye Eb) from the configuration file, VR display controller 957 calculates projection angle Φ of the enlarged image or the reduced image resulting from the visibility adjustment (movement of adjustment lenses 904) based on projection angles θ stored in correction data 11, from following Equation 4. Here, the projection angle corresponding to the distance from reference point 8a to the end of reference test pattern 7a is 0.5 (rad).

$$\text{Projection angle } \Phi = \text{projection angle } \theta \times 0.5/\text{viewing angle} \qquad \text{... (Equation 4)}$$

Subsequently, based on calculated projection angles Φ, VR display controller 957 calculates the distances (Real-Height) from reference point 8b to dots 9b in the enlarged image or the reduced image resulting from the visibility adjustment, from following Equation 5. Here, 0.4375 indicates the distance (normalized position) from reference point 8a to the end (14th dot) of reference test pattern 7a. Note that VR display controller 957 may calculate the distances (Real-Height) using the distance from reference point 8a to dot 9b other than the distance from reference point 8a to 14th dot 9b. However, VR display controller 957 can enhance the correction accuracy by using dot 9b closer to the end of the field-of-view image.

$$\text{Distance Real-Height} = \tan(\Phi) \times 0.4375 \qquad \text{... (Equation 5)}$$

Further, VR display controller 957 calculates the function, Ref-Height = f(Real-Height), which converts the distances (Real-Height) of dots 9b into the distances (Ref-Height) of corresponding dots 9a. For example, VR display controller 957 may calculate f(Real-Height) using a 1st-, 3rd-, 5th-, or 7th-degree polynomial approximation.

Thus, VR display controller 957 corrects virtual space image V so that the pixels located at the distances (Real-Height) of dots 9b are displayed at the positions of the distances (Ref-Height) of corresponding dots 9a.

As described above, VR display controller 957 corrects the distortion of virtual space image V based on projection angles θ of dots 9b in correction test pattern 7b corresponding to dots 9a in reference test pattern 7a. That is, since VR display controller 957 calculates the correction positions of dots 9b from projection angles θ, it is not required to calculate the correction positions of dots 9b based on a plurality of parameters such as the x-axis direction and the y-axis direction, for example, and it is thus possible to reduce the amount of distortion correction data.

In addition, VR display controller 957 can perform distortion correction and size correction in HMD 902 with high accuracy. In particular, the above-described correction methods are suitable for distortion correction, correction of chromatic aberration, and correction of the size of the field-of-view image in HMD 902 represented by an eyeglass type HMD in which visual acuity correction is independently performed on right-eye display section 905a and left-eye display section 905b. Further, the above-described correction methods are also useful when the user who regularly uses eyeglasses uses HMD 902 without wearing eyeglasses. In addition, VR display controller 957 stores the data of each user and loads the data at the time of use, so that it is possible to realize highly accurate distortion corrections when a plurality of users use one HMD 902.

In addition, VR display controller 957 can perform the distortion correction with high accuracy by performing distortion correction depending on usage conditions of HMD 902, regardless of differences in accuracy of individual HMD 902, the conditions of lenses such as visual acuity correction, and the like. Furthermore, VR display controller 957 can correct the chromatic aberration and size of virtual space image V with high accuracy.

In addition, VR display controller 957 can obtain a high-quality image by appropriately performing the left and right distortion correction, chromatic aberration, and the size correction on the field-of-view image in HMD 902 in which the visual acuity correction can be performed independently on right-eye display section 905a and left-eye display section 905b, and can thus enhance the sense of immersion in the virtual space.

Further, by providing a step of acquiring first distortion correction data in a default state prior to shipment of HMD 902 and a step of acquiring adjusted distortion correction data tailored to each user using HMD 902, the user can perform the distortion correction with high accuracy without using any particular equipment.

In addition, VR display controller 957 has a visual acuity adjustment process for guiding visual acuity adjustment, and thus can reliably perform the above-described highly accurate distortion correction.

It is generally known that the distortion aberration of HMD 902 is expressed by following Equations 6 and 7. Here, (x, y) represents coordinates with respect to the center (0, 0) of adjustment lens 904, ($X_d$, $Y_d$) represents the coordinates after distortion correction, $k_1$, $k_2$ represents a radial distortion factor of adjustment lens 904, and $p_1$, $p_2$ represents a circumferential distortion factor of adjustment lens 904.

$$X_d = p_2(3x^2 + y^2) + x(k_2(x^2 + y^2)^2 + k_1(x^2 + y^2) + 1) + 2p_1xy \qquad ... \text{(Equation 6)}$$

$$Y_d = p_1(x^2 + 3y^2) + y(k_2(x^2 + y^2)^2 + k_1(x^2 + y^2) + 1) + 2p_2xy \qquad ... \text{(Equation 7)}$$

Since parameters $k_1$, $k_2$ and $p_1$, $p_2$ are given by the properties of the optical system of HMD 902, VR display controller 957 may perform the distortion correction on virtual space image V by performing the inverse correction of Equations 6 and 7 based on these parameters.

In this way, after the distortion correction is performed on right-eye virtual space image Vr and left-eye virtual space image Vl, VR display controller 957 causes right-eye virtual space image Vr subjected to the distortion correction to be displayed on right-eye display section 905a, and causes left-eye virtual space image Vl subjected to the distortion correction to be displayed on left-eye display section 905b. As a result, as illustrated in FIG. 5, the user can visually recognize virtual space image V4 in which the strain is eliminated.

According to the present embodiment, VR display controller 957 corrects the distortion of virtual space image V based on projection angles θ of dots 9b in correction test pattern 7b corresponding to dots 9a in reference test pattern 7a. That is, since VR display controller 957 calculates the correction positions of dots 9b from projection angles θ, it is possible to reduce the amount of distortion correction data.

(Embodiment 2)

In Embodiment 1 described above, VR display controller 957 detects movement positions $p_2$ of adjustment lenses 904 based on the viewing angle of the user, but the present invention is not limited thereto as long as movement positions $p_2$ can be detected.

Embodiment 2 is an embodiment in which movement positions P2 of adjustment lenses 904 are directly detected.

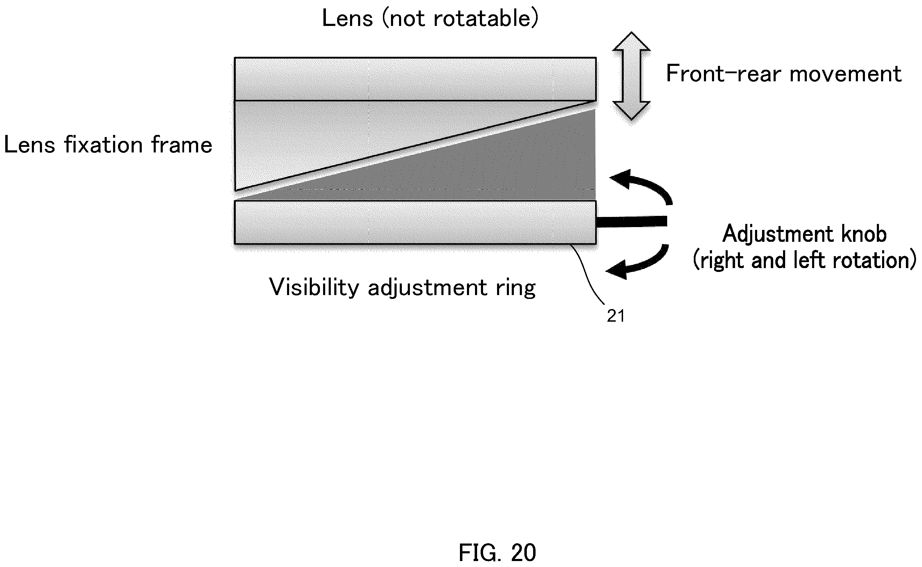

For example, as illustrated in FIG. 20, movement mechanism 21 that moves adjustment lenses 904 may include an inclined visibility adjustment ring, and the visibility adjustment ring may be configured to move in the up-down direction in accordance with the rotation of an adjustment knob. A lens fixation frame moves in the front-rear direction in accordance with the movement of the visibility adjustment ring, and adjustment lenses 904 fixed to the lens fixation frame move in the front-rear direction together with the lens fixation frame.

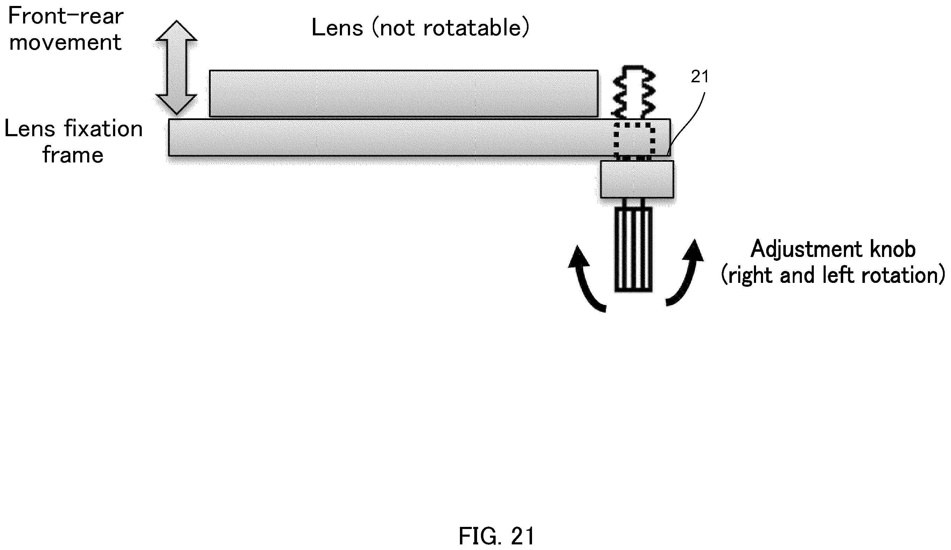

Further, as illustrated in FIG. 21, movement mechanism 21 may have a configuration in which a screw hole is formed in the lens fixation frame and the adjustment knob is screwed into the screw hole such that the lens fixation frame is movable in the front-rear direction. In response to the movement of the lens fixation frame, adjustment lenses 904 move in the front-rear direction together with the lens fixation frame.

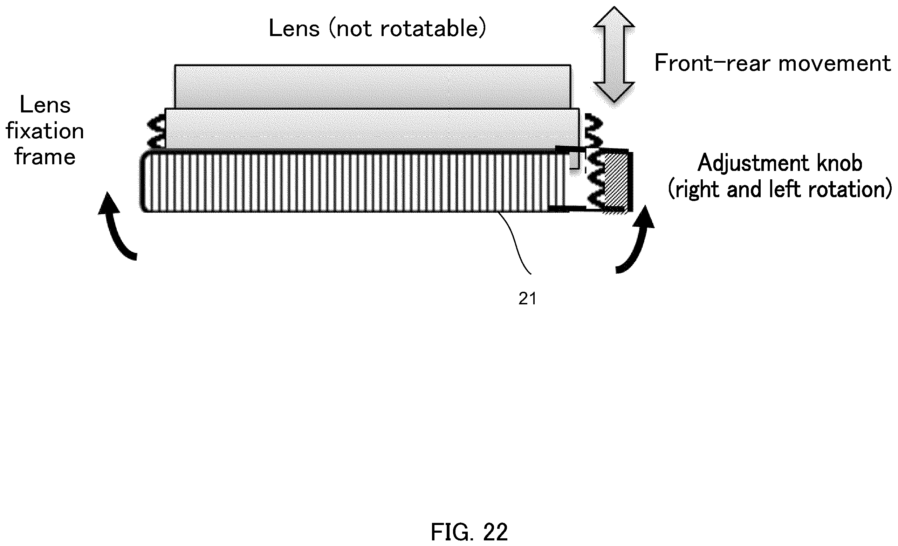

Further, as illustrated in FIG. 22, movement mechanism 21 may include the adjustment ring whose inner peripheral surface is screwed to the outer peripheral surface of the lens fixation frame that fixes adjustment lenses 904, and the lens fixation frame may be configured to move in the front-rear direction in accordance with the rotation of the adjustment ring. In response to the movement of the lens fixation frame, adjustment lenses 904 move in the front-rear direction together with the lens fixation frame.

Here, VR display controller 957 may directly detect the amount of movement of adjustment lenses 904, for example. For example, an optical means, an electrical means, or a magnetic means may be used to detect the amount of movement of adjustment lenses 904.

VR display controller 957 may also detect the amount of movement of adjustment lenses 904 from the motion of movement mechanism 21. For example, the amount of movement of adjustment lenses 904 may be calculated by detecting the position of the adjustment knob for adjusting the positions of adjustment lenses 904. At this time, the position of the adjustment knob may be detected using an optical means such as a rotary encoder, an electrical means, or a magnetic means.

Here, a relation between the positions of adjustment lenses 904 and the distortion aberration is given as a change in $k_1$, $k_2$ and $p_1$, $p_2$ of above Equations 6 and 7 in an optical design including adjustment lenses 904. Therefore, VR display controller 957 may perform distortion correction on virtual space image V by performing inverse correction as given by Equations 6 and 7 based on these parameters.

According to the present embodiment, since VR display controller 957 directly detects movement positions P2 of adjustment lenses 904, it is possible to automatically acquire the positions of adjustment lenses 904 without the user operating the controller.

(Embodiment 3)

Embodiment 3 is an embodiment in which the degree of distortion aberration of adjustment lenses 904 is detected, and the positions of adjustment lenses 904 are acquired based on the degree of distortion aberration.

For example, VR display controller 957 may change the distortion correction on adjustment lenses 904 such that beams of the controller are visible linearly. At this time, the beams are output so as to be horizontal in the vertical direction at the left and right ends or to be horizontal at the upper and lower ends, and the distortion correction amount is changed such that the beams do not bend, to eliminate the distortion aberration.

Further, VR display controller 957 may calculate the degree of distortion aberration from the test pattern and change the distortion correction amount.

Here, the relation between the positions of adjustment lenses 904 and the distortion correction amount is given as a change in $k_1$, $k_2$ and $p_1$, $p_2$ of above Equations 6 and 7 in the optical design including adjustment lenses 904. Therefore, VR display controller 957 may perform distortion correction on virtual space image V by performing inverse correction as given by Equations 6 and 7 based on these parameters.

According to the present embodiment, VR display controller 957 detects the degree of the distortion aberration of adjustment lenses 904, and acquires the positions of adjustment lenses 904 based on the degree of the distortion aberration. As a result, the distortion aberration can be greatly reduced, for example, to almost zero.

In Embodiments 1 to 3 described above, the correction test pattern is acquired by imaging the reference test pattern with the fisheye lens, but it is only necessary that the projection angle through the imaging lens can be acquired, and the present invention is not limited to imaging of the reference test pattern with the fisheye lens. For example, the correction test pattern may be obtained by imaging the reference test pattern with an optical lens having specific optical characteristics.

A reading apparatus of a computer that implements the functions of the above-described apparatuses by a program reads the program from a recording medium in which the program for realizing the functions of the above-described apparatuses s is recorded, and stores the program in a storage apparatus. Alternatively, a network card communicates with a server apparatus connected to the network, and stores, in the storage apparatus, a program for implementing the functions of the respective apparatuses downloaded from the server apparatuses.

Then, the CPU copies the programs stored in the storage apparatus to the RAM, and sequentially reads and executes instructions included in the programs from the RAM, thereby implementing the functions of the respective apparatuses.

This application is based on U.S. Provisional Application No. 63/407,302, filed on September 16, 2022, the contents of which are incorporated herein by reference.

Industrial Applicability

The correction method according to the present disclosure can be used for a method for correcting distortion of a virtual space image.

Reference Signs List

  1 HMD embedded software
  2 HMD control software
  3 VR application
  4 VR basic software
  5 Visual characteristic adjustment mechanism
  6 Adjustment controller
  7a Reference test pattern
  7b Correction test pattern
  8a, 8b Reference point
  9a, 9b Dot
  10 Fisheye lens
  11 Correction data

21 Movement mechanism
901 Head-mounted display system
902 Head-mounted display
903 Position sensor
904 Adjustment lens
904a Right-eye adjustment lens
904b Left-eye adjustment lens
905 Display section
905a Right-eye display
905b Left-eye display
906 Microphone
907 Speaker
908 Headphone terminal
909 Volume button
911 Position detector
912 Image display processor
913 EEPROM
916 Audio compressor
917 Microphone amplifier
919 Amplifier
921 Power switch
922, 960 Bus converter
923 Battery
924 Power control element
925 AV input
927 Radio communication element
951 Computer/smartphone
952 AV output
955 Position detection processor
956 VR controller
957 VR display controller
958 VR image decoder
959 Graphics generator
962 Non-volatile memory
963 Power switch
964 Power control element
966 Audio decoder
967 Audio reproduction controller
968 Multiplexer
969 Demultiplexer
970 Communication element

**Claims**

1. A correction method, comprising:

   acquiring, by processing circuitry of a head-mounted display, a projection angle of a dot of a correction test pattern projected through an imaging lens, the projection angle being calculated based on the correction test pattern obtained by imaging a reference test pattern by the imaging lens through an adjustment lens for adjusting a visual characteristic of a user, the dot of the correction test pattern corresponding to a dot of the reference test pattern, the reference test pattern including one dot disposed on a reference point and at least one dot disposed on each of a plurality of straight lines extending in different directions from the reference point; and
   correcting, by the processing circuitry, a distortion of a virtual space image based on the projection angle corresponding to the dot of the reference test pattern, the distortion being caused by the adjustment lens.

2. The correction method according to claim 1, wherein
   the imaging lens is a fisheye lens.

3. The correction method according to claim 1, wherein
the dot of the reference test pattern is disposed such that a density of the dot becomes sparser toward an outside from the reference point in the reference test pattern.

4. The correction method according to claim 3, wherein
the dots of the reference test pattern are disposed in a line on the plurality of straight lines extending radially from the reference point in the reference test pattern.

5. The correction method according to claim 4, wherein
the dots are disposed on the plurality of straight lines arranged equiangularly around the reference point.

6. A measurement method, comprising:

displaying, by processing circuitry of a head-mounted display, a virtual space image on a display section, the virtual space image being formed such that a size of a range indicator indicating a range in a projection plane is changeable in a state where a virtual camera and the projection plane are maintained at a constant distance to each other; and
measuring, by the processing circuitry, a viewing angle of a user based on the size of the range indicator by changing the size of the range indicator depending on a range of a field-of-view image in the virtual space image.

7. The measurement method according to claim 6, wherein
the range indicator is formed to indicate the range in a circular shape.

8. The measurement method according to claim 6, wherein
the processing circuitry acquires range information on the range indicator when the size of the range indicator is changed such that at least a part of the range indicator overlaps an end of the field-of-view image, and calculates the viewing angle of the user based on the range information.

9. The measurement method according to claim 6, wherein:

the head-mounted display includes a visual characteristic adjustment mechanism for adjusting a visual characteristic of the user by an adjustment lens disposed between an eye of the user and the display section, and an interpupillary distance adjustment mechanism for adjusting an interpupillary distance of the user, and
the visual characteristic or the interpupillary distance is adjusted before measurement of the viewing angle of the user.

10. The measurement method according to claim 9, wherein
at least one of the visual characteristic adjustment mechanism and the interpupillary distance adjustment mechanism adjusts the visual characteristic or the interpupillary distance in a state where the head-mounted display is worn by the user.

11. The measurement method according to claim 9, wherein
the visual characteristic adjustment mechanism adjusts the visual characteristic of each of a right eye and a left eye of the user.

12. The measurement method according to claim 6, wherein:

the processing circuitry measures the viewing angle of each of a right eye and a left eye of the user, and
the processing circuitry corrects sizes of a right-eye virtual space image and a left-eye virtual space image based on the viewing angle of the right eye and the viewing angle of the left eye, the right-eye virtual space image being displayed on the display section correspondingly to the right eye, the left-eye virtual space image being displayed on the display section correspondingly to the left eye.

13. A correction method, comprising:

adjusting, by processing circuitry of a head-mounted display, a visual characteristic of each of a right eye and a left eye of a user by a right-eye adjustment lens and a left-eye adjustment lens disposed between the right eye and the left eye of the user and a display section;

measuring, by the processing circuitry, a viewing angle of each of the right eye and the left eye of the user; and correcting, by the processing circuitry, a size of a right-eye virtual space image and a size of a left-eye virtual space image based on the viewing angle of the right eye and the viewing angle of the left eye, the right-eye virtual space image being displayed on the display section correspondingly to the right eye, the left-eye virtual space image being displayed on the display section correspondingly to the left eye.

14. A head-mounted display system, comprising:

a memory that stores a projection angle of a dot of a correction test pattern projected through an imaging lens, the projection angle being calculated based on the correction test pattern obtained by imaging a reference test pattern by the imaging lens through an adjustment lens for adjusting a visual characteristic of a user, the dot of the correction test pattern corresponding to a dot of the reference test pattern, the reference test pattern including one dot disposed on a reference point and at least one dot disposed on each of a plurality of straight lines extending in different directions from the reference point; and
processing circuitry that corrects a distortion of a virtual space image based on the projection angle corresponding to the dot of the reference test pattern, the distortion being caused by the adjustment lens.

15. A head-mounted display system, comprising:

a display that displays a virtual space image formed such that a size of a range indicator indicating a range in a projection plane is changeable in a state where a virtual camera and the projection plane are maintained at a constant distance to each other; and
processing circuitry that measures a viewing angle of a user by changing the size of the range indicator depending on a range of a field-of-view image in the virtual space image.

F

Image reference test pattern

⬇

Acquire correction test pattern

⬇

Calculate correction data

30

⬇ Shipment

901

902

Visual acuity adjustment

⬇

Measure viewing angle

⬇

Correct left and right sizes of virtual space image based on viewing angle

⬇

Correct distortion of virtual space image based on correction data and viewing angle

VR

951

FIG. 1

FIG. 2

1

HMD embedded
software

2 HMD control
software

3 VR application

4

VR image data

VR basic software    Audio, control data, etc.

FIG. 3

FIG. 4

FIG. 5

V1 — Figure desired to be displayed

V2 — Distortion correction by VR basic software

V3 — Distortion aberration of HMD

V4 — Display of HMD

FIG. 6

FIG. 7

FIG. 8A

FIG. 8B

S1

Display test pattern

S2

Capture image with
fisheye lens

S3

Captured
image $\Rightarrow$ Extract
coordinates

S4

Coordinates $\Rightarrow$ Angle
conversion

S5

Save in configuration
file of HMD

FIG. 9

FIG. 10A

FIG. 10B

FIG. 11

EP 4 589 943 A1

FIG. 12

EP 4 589 943 A1

**Processing by User PC**

Read correction data from configuration file — S6

Transfer correction data to driver of HMD — S7

Calculate polynomial correction factor — S9

Detect viewing angle of user — S8

Correct distortion — S10

Processing by application of HMD system

FIG. 13

FoV measurement

S11

Display circle to right eye and background for right eye to left eye

S12

Measure FoV of right eye

S13

Display circle to left eye and background for left eye to right eye

S14

Measure FoV of left eye

Completion of FoV measurement

FIG. 14

FoV measurement
(right eye, left eye)

S15

Adjust circumference of
displayed circle by controller
or the like

S16

Position to cause circumference
of circle on horizon to at least
partly disappear from field of view

S17

Calculate FoV from radius L and
distance S between virtual camera
and projection plane using equation
below

$$FoV = atan(L/S) \times 2$$

S18

Save calculated FoV in
configuration file

Completion of FoV
measurement (right
eye, left eye)

FIG. 15

Correction on sizes
seen by right and
left eyes

S19

Acquire FoV of each of right
and left eyes from
configuration file

S20

Calculate right and left
enlargement ratios resulting
in the same FoV

S21

Apply calculated
enlargement ratios to right
and left images by VR
display controller

Completion of correction
on sizes seen by right
and left eyes

FIG. 16

Vr                    Fr

Distance └r

FIG. 17A

Vl                    Fl

Distance └l

FIG. 17B

Fine adjustment on
right and left
displays

S22

Display fine adjustment
menu on right and left
displays

S23

Select item for performing fine
adjustment

S24

Display adjustment pattern

S25

Adjust with controller or
button

S26

End of adjustment

Completion of fine
adjustment on right
and left displays

FIG. 18

| Marker | Distance RefHeight from reference point | Projection angle $\theta$ [rad] | Angle [rad] of enlarged image by visibility adjustment $\Phi = \theta \times 0.5/\text{viewing angle}$ | Distance from reference point calculated from $\Phi$ RealHeight = $\tan(\Phi) \times 0.4375$ |
|---|---|---|---|---|
| 0 (center) | 0.0000 | 0.000000 | 0.000000 | 0.000000 |
| 1 | 0.0313 | 0.058070 | 0.064522 | 0.025434 |
| 2 | 0.0625 | 0.116938 | 0.129931 | 0.051395 |
| 3 | 0.0938 | 0.175007 | 0.194452 | 0.077357 |
| 4 | 0.1250 | 0.233077 | 0.258974 | 0.103859 |
| 5 | 0.1563 | 0.290332 | 0.322592 | 0.130714 |
| 6 | 0.1875 | 0.347595 | 0.386217 | 0.158509 |
| 7 | 0.2188 | 0.404858 | 0.449843 | 0.187483 |
| 8 | 0.2500 | 0.461315 | 0.512572 | 0.217476 |
| 9 | 0.2813 | 0.517764 | 0.575293 | 0.249198 |
| 10 | 0.3125 | 0.575027 | 0.638919 | 0.283537 |
| 11 | 0.3438 | 0.630670 | 0.700744 | 0.319437 |
| 12 | 0.3750 | 0.687119 | 0.763466 | 0.358971 |
| 13 | 0.4063 | 0.742763 | 0.825292 | 0.401699 |
| 14 (end reference) | **0.4375** | 0.797606 | 0.886229 | 0.448314 |

Reference test pattern

Reference point — 0.5 — End of field-of-view image

Correction test pattern

Viewing angle of user

FIG. 19

Lens (not rotatable)

Front-rear movement

Lens fixation frame

Adjustment knob
(right and left rotation)

Visibility adjustment ring

21

FIG. 20

Adjustment knob
(right and left rotation)

21

Lens (not rotatable)

Front–rear
movement

Lens fixation
frame

FIG. 21

FIG. 22

## INTERNATIONAL SEARCH REPORT

| International application No. |
| --- |
| **PCT/JP2023/031452** |

| A. | CLASSIFICATION OF SUBJECT MATTER |
| --- | --- |

*H04N 13/327*(2018.01)i; *H04N 13/122*(2018.01)i; *H04N 13/133*(2018.01)i; *H04N 13/344*(2018.01)i; *H04N 17/00*(2006.01)i
FI:   H04N13/327; H04N13/122; H04N13/133; H04N13/344; H04N17/00 G

According to International Patent Classification (IPC) or to both national classification and IPC

| B. | FIELDS SEARCHED |
| --- | --- |

Minimum documentation searched (classification system followed by classification symbols)

   H04N13/00; H04N17/00; H04N5/66; G02B27/02; G09G5/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-182127 A (SONY INTERACTIVE ENTERTAINMENT LLC) 05 November 2020 (2020-11-05)<br>   entire text | 1-15 |
| A | US 10277893 B1 (FACEBOOK TECHNOLOGIES, LLC) 30 April 2019 (2019-04-30)<br>   entire text | 1-15 |
| A | CN 114972526 A (HUAXING YUANCHUANG (CHENGDU) TECHNOLOGY CO., LTD.)<br>30 August 2022 (2022-08-30)<br>   entire text | 1-15 |
| A | KR 10-2022-0033223 A (IUCF-HYU (INDUSTRY-UNIVERSITY COOPERATION<br>FOUNDATION HANYANG UNIVERSITY)) 16 March 2022 (2022-03-16)<br>   entire text | 1-15 |

| ☐ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 November 2023** | **21 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/031452**

| Patent document cited in search report | Publication date (day/month/year) | Patent family member(s) | Publication date (day/month/year) |
|---|---|---|---|
| JP 2020-182127 A | 05 November 2020 | CN 111857623 A | |
| US 10277893 B1 | 30 April 2019 | (Family: none) | |
| CN 114972526 A | 30 August 2022 | (Family: none) | |
| KR 10-2022-0033223 A | 16 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019049421 A
- US 63407302